# EUROPEAN PATENT APPLICATION

(11) **EP 1 691 554 A1**
(43) Date of publication of application: **16.08.2006**
(21) Application number: 05003085.7
(22) Date of filing: 14.02.2005
(51) Int. Cl.: H04N 7/173

(54) **System for providing a media item**

(71) Applicant: Sony NetServices GmbH, 5081 Anif (AT)
(72) Inventor: Lipponen, Jarkko, 5081 Anif (AT)
(74) Representative: Kottmann, Heinz Dieter

(57) **Abstract**

The present invention relates to a system (10) for providing at least one media item to a user device (20), wherein an individual media title (2a, 2b, 2c) of the media item is additionally transmitted to the user device (20) for display. The central feature of the invention is that an additional information retrieval unit (12) is provided for determining whether or not additional information (5a, 5b) for a particular individual media title (2a, 2c), which is to be transmitted to the user device (20), is available, and for effecting an indication (3) that additional information (5a, 5b) is available for said media title when it is displayed on the user device (20). Further, the present invention relates to a user device using the offered service and methods for correspondingly providing and receiving at least one media item.

## Description

The present invention relates to a system for providing at least one media item, in particular at least one media channel, which is/are preferably personalized.

Such a media channel, e.g. a music channel, is usually provided by the system to a user device via a network. The whole data of the media channel might be hosted in one device, which might be connected to the network or which might directly be included or integrated within the user device. Networks have become ubiquitous these days. Telephone networks, computer networks, cellular networks are part of life. These networks, once separate entities, co-mingle to form means for the transport of data to any connected device. The networks enable people access to data, data that informs and entertains. Once information and entertainment items that suit the information needs, the entertainment wants and the personal tastes are found by the system based on an indication of a user or a user profile, access of the content is performed and transmitted to the user device.

The applicant developed a Personal Media System (PMA), which is an entertainment product offering a music service, e.g.:
personalized channels, pre-defined channels, pre-defined playlists, consumer defined playlists, a music selection feature, and related content like ringtones typically for use with mobile (cellular) telephone handsets, in audio form with a display of the playlist in text form.

The PMA service is offered to end-consumers over any data network and might be executed online or offline, e.g.:
■ mobile telephone network (including 3G, 4G and other wireless data networks whether circuit or packet switched),
■ digital interactive TV including interactive TV and DVB-H (Digital Video Broadcasting - Handheld) networks

The PMA service is available on any capable device, e.g.:
■ mobile (cellular) phone,
■ personal computer,
■ home entertainment product, e.g.: TV set, HiFi stereo, game console..., and/or
■ mobile entertainment product, e.g. network walkman™, ....

The service offered is either of
■ a streaming service, i.e. the consumer does not own the content, e.g. media content is selected for one-time only playback, and
■ a download service, i.e. the consumer owns or licenses the content, e.g. media content is downloaded to storage managed by the consumer.

Therefore, a sophisticated structure to supply content to consumers is given.

However, in general no or only limited additional services, i.e. services that enhance the music service, are offered.

Therefore, it is the object underlying the present invention to enhance a music service which is provided from a system to a user device.

This object is solved by a system for providing at least one media item to a user device according to independent claim 1, by a user device for receiving at least one media item from a system according to independent claim 9, by a method for providing at least one media item to a user device according to independent claim 16, and by a method for receiving at least one media item from a system according to independent claim 24. Respective preferred embodiments thereof are respectively defined in the respective following sub-claims. A computer program product according to the present invention is defined in claim 31 and a computer accessible storage medium according to the present invention is defined in claim 32.

Therefore a system for providing at least one media item to a user device, wherein an individual media title of the media item is additionally transmitted to the user device for display, according to the present invention comprises an additional information retrieval unit for determining whether or not additional information for a particular individual media title, which is to be transmitted to the user device, is available, and for effecting an indication that additional information is available for said media title when it is displayed on the user device.

In other words, the system according to the present invention enhances the transmission of media items. In particular, in an embodiment of a media channel, which is preferably an individualized music channel, the invention enhances the media channel by specially indicating those media titles in the playlist of the media channel, for which additional information is available. The user that accesses the media channel has then the opportunity to verify whether or not additional information for a particular individual media title, e.g. that which the user currently accesses, is available. In case such additional information is available, the user can access and/or use this additional information depending on the type of additional information and the user device used, as is set-out in more detail below.

According to the invention, a media item is preferably a piece of music and at least one media item is preferably at least one media channel, which might be an audio channel, e.g. a music channel, and/or an A/V channel, which might be used for music promotional videos, respectively. Further, a media title is preferably a music title or any form or identifier recognizable to a user. It might be as simple as something that says "track #1". Further, it might include such metadata as artist and track time appended together as a music title. Still further, the additional information might in fact represent information relating to the media title; on the other hand, it might be A/V content or other media, such as games and other digital data relating to the particular individual media title.

The system according to the present invention preferably additionally comprises a user request evaluation unit for receiving an incoming user request for additional information in respect of a particular individual media title and for a subsequent transmitting of said additional information to the user device.

This feature secures that the system according to the present invention saves network resources by not directly transmitting the additional information to the user device, but by just transmitting an indicator that additional information is available and then wait for a user request to actually transmit the additional information. The user request evaluation unit might also be able to distinguish between different kinds of additional information and then communicate only the wanted additional information to the user device.

In the system according to the present invention, said additional information retrieval unit preferably effects an indication that additional information is available for a particular media title when it is displayed on the user device by indicating or instructing a particular font and/or a particular colour for the displaying of the media title, that the media title should be highlighted, and/or that an icon or a symbol should be displayed together with the media title.

This feature has the additional effect of saving needed transmission bandwidth, since the kind of displaying a media title in the playlist or also the additional display of an icon or a symbol can be determined based on a simple flag, at least in case only two different kinds of alternative displays are possible.

In the system according to the present invention, said additional information preferably comprises electronic program guide data informing a user as to the channel and timing of a transmission, the transmission including media content related to the artist or composer of the particular media title.

In the system according to the present invention, said additional information additionally or alternatively preferably comprises cross promotion data for the particular media title informing a user as to the channel and timing of a transmission including corresponding cross promotion media content of the particular media title.

In the system according to the present invention, said additional information additionally or alternatively preferably comprises a data stream signal or a link to a data stream signal that enables the user to program a video recorder via the user device to record a television program in respect to the artist, a promotion, and/or a video of the particular media title. According to the invention, such a data stream signal might be an infrared data stream signal, a Bluetooth signal, a HF data stream signal or any other data stream signal suitable to be understood by a video recorder.

The (infrared) data stream signal preferably holds data based on which the user device can generate/transmit an infrared data stream to a video recorder (VCR) so that the VCR gets programmed to record a particular television channel at a particular date and time. The term VCR is used generically for a recording device and is not limited to cassette based systems and includes for example hard disk and optical disc recorders.

Therewith, the additional information that is preferably transmitted to the user device enables the user to obtain additional performances from the artist that interprets the particular media title and/or to obtain cross promotion data, i.e. obtain information related to the particular media title. The additional information enables the user to directly watch a particular television channel at a particular date and time without the need to search a program guide. Further, the programming of a VCR is also eased in case the user uses the user device to transmit a programming (infrared) data stream to the VCR.

The system according to the present invention further additionally or alternatively preferably comprises a user instruction evaluation unit for receiving an incoming user instruction to program a networked video recorder to record a television program in respect to the artist, a promotion, and/or a video of a particular media title, for retrieving and/or evaluating the programming information for said video recorder, and for a subsequent transmitting of said programming information to said video recorder.

In this case, the user can instruct a programming of a VCR even when not being able to directly program the VCR himself, e.g. when the user has a mobile user device, listens to a particular song (the media title in this case might be the title of that song) during travelling in a train, observes that a TV concert with the artist of the song will be broadcasted in 20 minutes, and recognizes that he will not be at home to watch the concert at that time.

In the system according to the present invention, said at least one media item is preferably at least one piece of music, further preferably arranged to at least one media channel, e.g. a music channel, and said media title is preferably a music title.

A user device for receiving at least one media item from a system, wherein an individual media title of the media item is additionally received and displayed by the user device according to the present invention comprises an indication unit for receiving an indication or instruction to indicate that additional information is available for a particular media title when it is displayed on the user device and for a subsequent displaying of said title with a corresponding indication that additional information is available for said particular media title. In other words, the user device according to the present invention can use the enhanced media item that is provided by the system according to the present invention.

The user device according to the present invention further preferably comprises a user request communication unit for transmitting a user request for additional information in respect of a particular individual media title to the system.

In the user device according to the present invention said indication unit preferably effects an indication that additional information is available for the particular media title when it is displayed on the user device by using a particular font and/or a particular colour for displaying the media title, by highlighting the media title, and/or by displaying an icon or a symbol together with the media title.

The user device according to the present invention further additionally or alternatively preferably comprises an additional information receiving unit for receiving additional information in respect to a particular media title and for displaying the additional information or a description thereof on the user device.

In this sense, a description of the additional information could e.g. be that the additional information comprises a (infrared) data stream signal to program a VCR to record a particular program at a particular date and time.

The user device according to the present invention further additionally or alternatively preferably comprises a programming command unit for generating or requesting and receiving a programming command to program a video recorder to record a television program in respect to the artist, a promotion, and/or a video of the particular media title corresponding to the additional information.

Therewith, the user device according to the present invention either itself generates the (infrared) data stream signal, e.g. from the transmitted additional information that indicates the television channel, the date, the start time and the end time, or it requests this (infrared) data stream signal, e.g. from the system, e.g. based on the additional information or just on the media title, since the system itself knows the additional information as well, or from another provider who converts textual information to a (infrared) data stream signal.

The additional information received and processed in the user device preferably comprises electronic program guide data informing a user as to the channel and timing of a transmission, the transmission including media content related to the artist or composer of the particular media title, and/or cross promotion data for the particular media title informing a user as to the channel and timing of a transmission including corresponding cross promotion media content of the particular media title, and/or a (infrared) data stream signal or a link to a (infrared) data stream signal that enables the user to program a video recorder via the user device to record a television program in respect to the artist, a promotion, and/or a video of the particular media title.

The user device according to the present invention further additionally or alternatively preferably comprises a user instruction communication unit for generating a user instruction to the system to generate programming information to program a networked video recorder to record a television program in respect to the artist, a promotion, and/or a video of the particular media title.

In the user device according to the present invention, said at least one media item is preferably at least one piece of music, further preferably arranged to at least one media channel, e.g. a music channel, and said media title is preferably a music title.

The method for providing at least one media item to a user device, wherein an individual media title of the media item is additionally transmitted to the user device for display according to the present invention comprises the steps:
determining whether or not additional information for a particular individual media title, which is to be transmitted to the user device, is available, and
effecting an indication that additional information is available for said media title when it is displayed on the user device.

This method according to the present invention preferably further comprises the steps:
receiving an incoming user request for additional information in respect of a particular individual media title, and
subsequently transmitting said additional information to the user device.

In this method according to the present invention preferably said effecting of an indication that additional information is available for a particular media title when it is displayed on the user device is performed by indicating or instructing a particular font and/or a particular colour for the displaying of the media title, that the media title should be highlighted, and/or that an icon or a symbol should be displayed together with the media title.

In this method according to the present invention preferably the additional information comprises electronic program guide data informing a user as to the channel and timing of a transmission, the transmission including media content related to the artist or composer of the particular media title.

In this method according to the present invention alternatively or additionally preferably the additional information comprises cross promotion data for the particular media title informing a user as to the channel and timing of a transmission including corresponding cross promotion media content of the particular media title.

In this method according to the present invention alternatively or additionally preferably the additional information comprises a (infrared) data stream signal or a link to a (infrared) data stream signal that enables the user to program a video recorder via the user device to record a television program in respect to the artist, a promotion, and/or a video of the particular media title.

This method according to the present invention preferably further alternatively or additionally comprises the steps:
receiving an incoming user instruction to program a networked video recorder to record a television program in respect to the artist, a promotion, and/or a video of a particular media title,
retrieving and/or evaluating the programming information for said video recorder, and
subsequently transmitting said programming information to said video recorder.

In this method according to the present invention, said at least one media item is preferably at least one piece of music, further preferably arranged to at least one media channel, e.g. a music channel, and said media title is preferably a music title.

Therewith, the method for providing at least one media item to a user device, wherein an individual media title of the media item is additionally transmitted to the user device for display according to the present invention enables all features of the system for providing at least one media item to a user device, wherein an individual media title of the media item is additionally transmitted to the user device for display according to the present invention.

The method for receiving at least one media item from a system, wherein an individual media title of the media item is additionally received and displayed by a receiving user device according to the present invention comprises the steps:
receiving an indication or instruction to indicate that additional information is available for a particular media title when it is displayed on the user device, and
subsequently displaying the particular media title with a corresponding indication that additional information is available for said particular media title.

This method according to the present invention preferably further comprises the steps:
transmitting a user request for additional information in respect of a particular individual media title to the system, and
receiving of said additional information from the system.

In this method according to the present invention preferably said indication that additional information is available for the particular media title when it is displayed on the user device is effected by using a particular font and/or a particular colour for displaying the media title, by highlighting the media title, and/or by displaying an icon or a symbol together with the media title.

This method according to the present invention preferably further alternatively or additionally comprises the steps:
receiving additional information in respect to a particular media title, and
displaying the additional information or a description thereof on the user device.

This method according to the present invention preferably further alternatively or additionally comprises the step:
generating or requesting and receiving a programming command to program a video recorder to record a television program in respect to the artist, a promotion, and/or a video of the particular media title corresponding to the additional information.

This method according to the present invention preferably further alternatively or additionally comprises the step:
generating a user instruction to the system to generate a programming information to program a networked video recorder to record a television program in respect to the artist, a promotion, and/or a video of a particular media title.

In this method according to the present invention, said at least one media item is preferably at least one piece of music, further preferably arranged to at least one media channel, e.g. a music channel, and said media title is preferably a music title.

Therewith, the method for receiving at least one media item from a system, wherein an individual media title of the media item is additionally received and displayed by a receiving user device according to the present invention enables all features of the user device for receiving at least one media item from a system, wherein an individual media title of the media item is additionally received and displayed by the user device according to the present invention.

A computer program product according to the present invention comprises computer program means adapted to perform the method steps as defined above when being executed on a computer, digital signal processor or the like.

A computer readable storage means according to the present invention stores thereon a computer program product according to the present invention.

For a better understanding of the invention and to further elucidate the invention, its features, objects and advantages, an exemplary preferred embodiment thereof is described in detail by way of example while making reference to the accompanying drawing, wherein:
- Fig. 1: shows an example of a music channel provision system and a user device for receiving music channels according to an exemplary embodiment of the present invention, and
- Fig. 2: shows a playlist of a channel and different types and possibilities of additional information.

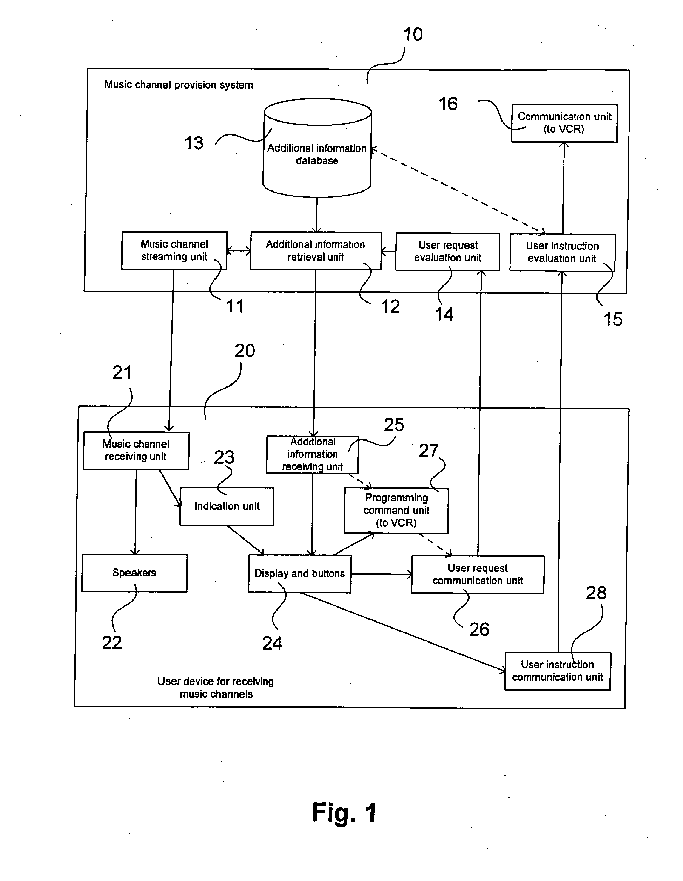

Figure 1 shows a music channel provision system 10 according to a preferred exemplary embodiment of the present invention, e.g. a server of a content service provider, and a user device 20 according to a preferred exemplary embodiment of the present invention, e.g. a suitably equipped PDA (personal digital assistant) or a SmartPhone. Additional units other than those shown might be included in the music channel provision system 10 and the user device 20.

The music channel provision system 10 comprises a music channel streaming unit 11, an additional information retrieval unit 12, an additional information database 13, a user request evaluation unit 14, a user instruction evaluation unit 15, and a communication unit (to a VCR) 16.

The music channel streaming unit 11 outputs an individualized music channel to the user device. The music channel comprises a playlist of the individual titles of the music channel, in which the individual titles for which additional information is available are indicated. The additional information retrieval unit 12 accesses the additional information database 13 to evaluate whether or not additional information for particular music titles is available. If additional information is available for a particular music title, the additional information retrieval unit 12 indicates this title to the music channel streaming unit 11 so that the particular music title will be marked to be displayed in a special way in the user device 20 so that the user can recognize that additional information in respect to this title is available.

If the user indicates that he wants to receive additional information, this request, which is transmitted from the user device, is received by the user request evaluation unit 14. The user request evaluation unit 14 determines which kind of additional information the user wants and for which title this additional information should be provided and communicates the result to the additional information retrieval unit 12. After the additional information retrieval unit 12 receives such a result from the user request evaluation unit 14, it retrieves the additional information from the additional information database 13 and provides it to the user device 20.

If the user instructs the system to program a VRC according to the additional information for a particular title, this instruction is received by the user instruction evaluation unit 15. The user instruction evaluation unit 15 determines which kind of VCR should be programmed for which additional information and communicates the result to the communication unit 16, which performs the programming of the networked VCR through an appropriate network. The user instruction evaluation unit 15 determines the additional information either from the instruction itself or - in case the instruction only comprises the particular music title - via the additional information database 13.

The user device 20 for receiving music channels according to the exemplary embodiment shown in figure 1 comprises a music channel receiving unit 21, speakers 22, an indication unit 23, a display with input buttons 24, an additional information receiving unit 25, a user request communication unit 26, a programming command unit (to VCR) 27, and a user instruction communication unit 28.

The music channel receiving unit 21 receives the output of the music channel streaming unit 11 of the music channel provision system 10. The received music stream is output to the speakers 22 and the received playlist is output to the indication unit 23, which formats the playlist according to the indication of available additional information and forwards it to the display with input buttons 24. When the user operates one of the buttons to indicate that he wants to receive additional information in respect to a particular music title, this action is forwarded by the user request communication unit 26 to the user request evaluation unit 14 of the music channel provision system 10. The resulting additional information transmitted by the additional information retrieval unit 12 of the music channel provision system 10 is received by the additional information receiving unit 25, formatted and forwarded to the display with input buttons 24.

If the user operates a button to obtain programming information in respect to the additional information, the programming and command unit 27 either derives the programming information from the additional information (under knowledge of the type of VCR), or requests the programming information from the music channel provision system (via the user request communication unit 27, the user request evaluation unit 14 and the additional information retrieval unit 12, which retrieves this information from the additional information database 13 and communicates it to the programming command unit 27 via the additional information receiving unit 25) or from another (not shown) provider. The programming information might directly be in the form of an infrared data stream signal, from which the user device 20 can generate an infrared data stream to program the VCR accordingly, or might be converted into such a signal by the user device 20.

If the user operates a button to instruct the system to provide a programming of a (specified) VCR in respect to the additional information, the user instruction command unit 28 either communicates the additional information or the particular music title to the user instruction evaluation unit 15 of the music channel provision system 10. Further, the user instruction command unit 28 communicates the network address and the type of the VCR to be programmed to the user instruction evaluation unit 15 of the music channel provision system 10 so that this unit can perform an appropriate programming of the VCR.

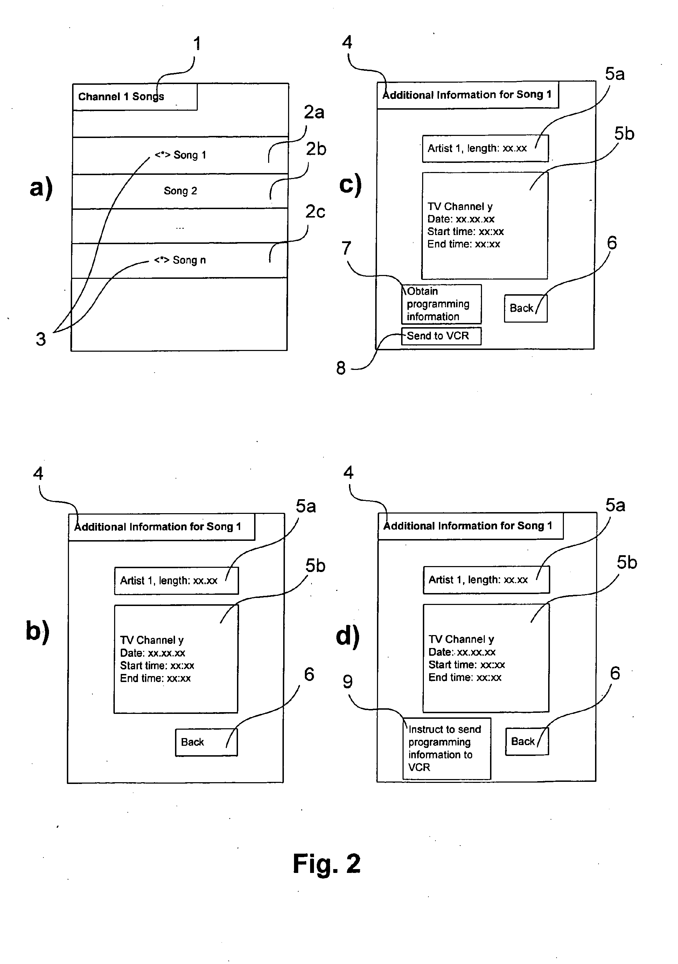

Figure 2a depicts an exemplary playlist of the songs streamed in a personalized music channel 1, here the channel 1 songs. The streamed songs include a first song 2a, a second song 2b, and a third song 2c. A special symbol 3, namely <*>, is displayed in front of the first song 2a and the third song 2c. This symbol 3 indicates that additional information is available for these booth songs.

Figure 2b depicts an exemplary display of additional information 4 for the first song 2a. The additional information comprises the artist of the first song 2a and the length of the first song 2a as first additional information 5a and a TV channel and the date, start time and end time of a TV transmission in respect to the artist of the first song 2a as second additional information 5b. This common display of first and second additional information is not mandatory according to the present invention, one type of additional information is sufficient. The first additional information might alternatively or additionally comprise other data in relation to the particular song. The second additional information could also additionally or alternatively relate to a cross promotion in respect to the first song 2a. Also, the second additional information could be infrared data stream data that enables the user device to program a VCR. A back button 6 enables the switching back to the playlist.

Figure 2c depicts a further exemplary display of additional information 4 for the first song 2a. Additionally to the display of the additional information shown in figure 2b), the additional information comprises an "obtain programming information" button 7, which effects a calculation or loading of programming information in respect to the displayed second additional information 5b, and a "send to VCR" button 8, which effects a sending of the calculated or loaded programming information to the VCR. Of course, the programming information needs not to be transmitted to the VCR by way of an infrared data stream, but a RF frequency transmission or another appropriate transmission might be used. Wired or wireless transmission systems may be used.

Figure 2d depicts a further exemplary display of additional information 4 for the first song 2a. Additionally to the display of the additional information shown in figure 2b), the additional information comprises an "instruct to send programming information to VCR" button 9, which effects a programming of the VCR through the music channel provision system 10.

## Claims

1. System (10) for providing at least one media item to a user device (20), wherein an individual media title (2a, 2b, 2c) of the media item is additionally transmitted to the user device (20) for display, **characterized by**
an additional information retrieval unit (12) for determining whether or not additional information (5a, 5b) for a particular individual media title (2a, 2c), which is to be transmitted to the user device (20), is available, and for effecting an indication (3) that additional information (5a, 5b) is available for said media title when it is displayed on the user device (20).

2. System (10) according to claim 1, **characterized by** a user request evaluation unit (14) for receiving an incoming user request for additional information (5a, 5b) in respect of a particular individual media title (2a) and for a subsequent transmitting of said additional information (5a, 5b) to the user device (20).

3. System (10) according to claim 1 or 2, **characterized in that** said additional information retrieval unit (12) effects an indication that additional information (5a, 5b) is available for a particular media title when it is displayed on the user device (20) by indicating or instructing a particular font and/or a particular colour for the displaying of the media title, that the media title should be highlighted, and/or that an icon or a symbol (3) should be displayed together with the media title (2a, 2c).

4. System (10) according to any one of the preceding claims, **characterized in that** the additional information comprises electronic program guide data (5b) informing a user as to the channel and timing of a transmission, the transmission including media content related to the artist or composer of the particular media title (2a).

5. System (10) according to any one of the preceding claims, **characterized in that** the additional information comprises cross promotion data (5b) for the particular media title informing a user as to the channel and timing of a transmission including corresponding cross promotion media content of the particular media title (2a).

6. System (10) according to any one of the preceding claims, **characterized in that** the additional information comprises a data stream signal or a link to a data stream signal that enables the user to program a video recorder via the user device (20) to record a television program in respect to the artist, a promotion, and/or a video of the particular media title (2a).

7. System (10) according to any one of the preceding claims, **characterized by** a user instruction evaluation unit (15) for receiving an incoming user instruction to program a networked video recorder to record a television program in respect to the artist, a promotion, and/or a video of a particular media title, for retrieving and/or evaluating the programming information for said video recorder, and for a subsequent transmitting of said programming information to said video recorder.

8. System (10) according to any one of the preceding claims, **characterized in that** said at least one media item is at least one piece of music and said media title (2a, 2b, 2c) is a music title.

9. User device (20) for receiving at least one media item from a system (10), wherein an individual media title (2a, 2b, 2c) of the media item is additionally received and displayed by the user device (20), **characterized by**
an indication unit (23) for receiving an indication or instruction to indicate that additional information (5a, 5b) is available for a particular media title (2a, 2c) when it is displayed on the user device (20) and for a subsequent displaying of said title with a corresponding indication (3) that additional information (5a, 5b) is available for said particular media title (2a, 2c).

10. User device (20) according to claim 9, **characterized by** a user request communication unit (26) for transmitting a user request for additional information in respect of a particular individual media title (2a) to the system (10).

11. User device (20) according to claim 9 or 10,
**characterized in that** said indication unit (23) effects an indication that additional information is available for the particular media title (2a, 2c) when it is displayed on the user device (20) by using a particular font and/or a particular colour for displaying the media title, by highlighting the media title, and/or by displaying an icon or a symbol (3) together with the media title (2a, 2c).

12. User device (20) according to anyone of the preceding claims 9 to 11, **characterized by** an additional information receiving unit (25) for receiving additional information in respect to a particular media title (2a) and for displaying the additional information (5a, 5b) or a description thereof on the user device (20).

13. User device (20) according to claim 12, **characterized by** a programming command unit (27) for generating or requesting and receiving a programming command to program a video recorder to record a television program in respect to the artist, a promotion, and/or a video of the particular media title (2a) corresponding to the additional information (5a, 5b).

14. User device (20) according to anyone of the preceding claims 9 to 13, **characterized by** a user instruction communication unit (28) for generating a user instruction to the system (10) to generate a programming information to program a networked video recorder to record a television program in respect to the artist, a promotion, and/or a video of the particular media title (2a).

15. User device (20) according to any one of the preceding claims 9 to 14, **characterized in that** said at least one media item is at least one piece of music and said media title (2a, 2b, 2c) is a music title.

16. Method for providing at least one media item to a user device (20), wherein an individual media title (2a, 2b, 2c) of the media item is additionally transmitted to the user device (20) for display, **characterized by** the steps:
determining whether or not additional information (5a, 5b) for a particular individual media title (2a, 2c), which is to be transmitted to the user device (20), is available, and
effecting an indication (3) that additional information (5a, 5b) is available for said media title (2a, 2c) when it is displayed on the user device (20).

17. Method according to claim 16, **characterized by** the steps:
receiving an incoming user request for additional information (5a, 5b) in respect of a particular individual media title (2a), and
subsequently transmitting said additional information (5a, 5b) to the user device (20).

18. Method according to claim 16 or 17, **characterized in that** said effecting of an indication that additional information (5a, 5b) is available for a particular media title when it is displayed on the user device (20) is performed by indicating or instructing a particular font and/or a particular colour for the displaying of the media title, that the media title should be highlighted, and/or that an icon or a symbol should (3) be displayed together with the media title (2a, 2c).

19. Method according to any one of the preceding claims 16 to 18, **characterized in that** the additional information comprises electronic program guide data (5b) informing a user as to the channel and timing of a transmission, the transmission including media content related to the artist or composer of the particular media title (2a).

20. Method according to any one of the preceding claims 16 to 19, **characterized in that** the additional information comprises cross promotion data for the particular media title informing a user as to the channel and timing of a transmission including corresponding cross promotion media content of the particular media title (2a).

21. Method according to any one of the preceding claims 16 to 20, **characterized in that** the additional information comprises a data stream signal or a link to a data stream signal that enables the user to program a video recorder via the user device (20) to record a television program in respect to the artist, a promotion, and/or a video of the particular media title (2a).

22. Method according to any one of the preceding claims 16 to 21, **characterized by** the steps:
receiving an incoming user instruction to program a networked video recorder to record a television program in respect to the artist, a promotion, and/or a video of a particular media title (2a),
retrieving and/or evaluating the programming information for said video recorder, and
subsequently transmitting said programming information to said video recorder.

23. Method according to any one of the preceding claims 16 to 22, **characterized in that** said at least one media item is at least one piece of music and said media title (2a, 2b, 2c) is a music title.

24. Method for receiving at least one media item from a system (10), wherein an individual media title (2a, 2b, 2c) of the media item is additionally received and displayed by a receiving user device (20), **characterized by** the steps:
receiving an indication or instruction to indicate that additional information (5a, 5b) is available for a particular media title (2a, 2c) when it is displayed on the user device (20), and
subsequently displaying the particular media title (2a, 2c) with a corresponding indication (3) that additional information is available for said particular media title (2a, 2c).

25. Method according to claim 24, **characterized by** the steps:
transmitting a user request for additional information (5a, 5b) in respect of a particular individual media title (2a, 2c) to the system (10), and
receiving of said additional information (5a, 5b) from the system (10).

26. Method according to claim 25 or 26, **characterized in that** said indication that additional information is available for the particular media title when it is displayed on the user device (20) is effected by using a particular font and/or a particular colour for displaying the media title, by highlighting the media title, and/or by displaying an icon or a symbol (3) together with the media title (2a, 2c).

27. Method according to any one of the preceding claims 24 to 26, **characterized by** the steps:
receiving additional information (5a, 5b) in respect to a particular media title (2a), and
displaying the additional information (5a, 5b) or a
description thereof on the user device (20).

28. Method according to claim 27, **characterized by** the step:
generating or requesting and receiving a programming command to program a video recorder to record a television program in respect to the artist, a promotion, and/or a video of the particular media title (2a) corresponding to the additional information (5b).

29. Method according to any one of the preceding claims 24 to 28, **characterized by** the step:
generating a user instruction to the system (10) to generate a programming information to program a networked video recorder to record a television program in respect to the artist, a promotion, and/or a video of a particular media title (2a).

30. Method according to any one of the preceding claims 24 to 29, **characterized in that** said at least one media item is at least one piece of music and said media title (2a, 2b, 2c) is a music title.

31. Computer program product, comprising computer program means adapted to perform the method steps as defined in anyone of claims 16 to 30 when being executed on a computer, digital signal processor or the like.

32. Computer readable storage means, storing thereon a computer program product according to claim 31.
